# EUROPEAN PATENT SPECIFICATION

(11) **EP 2 988 050 B1**
(45) Date of publication and mention of the grant of the patent: **25.07.2018**
(21) Application number: 13900354.5
(22) Date of filing: 24.12.2013
(51) Int. Cl.: F16L 59/14, F16L 9/18

(54) **METHOD FOR PRODUCING INSULATED PIPES AND SHAPED PRODUCTS FOR PIPELINES**
VERFAHREN ZUR HERSTELLUNG ISOLIERTER ROHRE UND FORMKÖRPER FÜR ROHRLEITUNGEN
PROCÉDÉ DE FABRICATION DE TUBES ISOLÉS ET D'ARTICLES DE REVÊTEMENT POUR CONDUITS

(43) Date of publication of application: 24.02.2016
(73) Proprietor: Obschestvo S Ogranichennoy Otvetstvennostiyu "Smit-Yartsevo", Smolenskaya obl. 215800 (RU)
(72) Inventor: PAVLYUK, Evgeniy Sergeevich, g. Mogilev 212030 (BY); NARKEVICH, Sergey Leonidovich, g. Mogilev 212030 (BY)
(74) Representative: Sloboshanin, Sergej
(86) International application number: PCT/RU2013/001159
(87) International publication number: WO 2015/099559

(56) References cited:
- RU-C2- 2 249 756
- RU-U1- 95 061
- RU-U1- 95 061
- RU-U1- 114 502
- US-A- 3 492 029
- US-A- 5 263 469
- US-A- 5 996 643
- US-B2- 8 231 952
- US-B2- 8 231 952

## Description

### Technological field to which the invention relates

The invention relates to pipeline technology, particularly to a method for producing preliminarily thermally insulated pipes and shaped products for pipelines in which a foaming material, for instance polyurethane foam, works as thermal insulation cover. Said pipes and shaped products are applied in the construction of pipeline systems for various fields of industry.

The preliminarily insulated pipe is essentially an integral "pipe-in-pipe" construction consisting of: an inner (metal or polymer) working pipe with installed centering supports, a thermal insulation layer applied onto it, a system monitoring the condition of the thermal insulation layer in the form of a remote operation control system (ROCS) or a leak detection system (LDS), and an outer waterproofing casing pipe. Materials that form polymer foams of various types act as the components that form the thermal insulation layer: foaming plastics, porous plastics, honeycombed plastics etc.

The preliminarily insulated shaped products for the pipelines (hereafter referred to as "shaped products") have an analogous construction and are provided for effecting a change of direction, a merger or a separation, a widening or narrowing of the heat-carrier flow acting as the working medium. Branches, junctions, T-pieces and other elements required for a complete functioning of the pipeline or pipeline system are used as shaped products.

A method for producing a thermally insulated pipe is known (RF Patent RU 2273787, 2006), according to which the outer and inner surfaces are hermetically sealed by detachable plugs, centering elements are attached to the working pipe, their number and the distance between adjacent centering elements being selected based on a condition of crease-resistance of the casing by the part of the pipe mass impacting one centering element. The device is brought into a horizontal position, the hollow bodies and the outer casing of galvanised sheet steel covered with a heat-reflecting material are arranged on a support, and the hollow bodies are installed on the support with an arresting device. A liquid (industrial water) is fed into the cavity, and due to its displacement force a coaxiality of the working pipe and the casing pipe is achieved. Further, the working pipe is introduced into the casing pipe by pushing. After arranging the working pipe in the casing pipe, the hollow body is drained of liquid, and moisture is removed by drying. Subsequently the annular gap between the pipes at the ends is hermetically sealed by plugs shaped as a truncated cone with an outer and an inner taper, respectively, the large bases oppositely oriented, preliminarily covering the connecting surfaces of the plugs in a hermetically sealing structure. If foaming material (polyurethane foam) is used as thermal insulation, the annular gaps at the ends are hermetically sealed by the plugs by means of a disc-shaped device with a guiding tail part, after which they are fixed by locking bolts. Subsequently the annular gap between the working pipe and the casing pipe is filled with a foaming thermal insulation material through an aperture of the pipe-casing. If air is used as the thermal insulation material, a compensation valve is mounted in the casing to remove excess pressure that builds up as a result of heating.

The method according to the prior art of RU 2273787 requires additional equipment for feeding and removing liquid and siccative, it also requires the application of detachable plugs, hermetically sealing structures etc., which reduces the overall technical efficiency of the production process.

The document US 8 231 952 refers to a process for the batchwise production of insulated pipes, which process comprises the steps: 1) provision of medium pipe and casing, the medium pipe being arranged inside the casing, 2) production of a polyisocyanurate foam by reacting an isocyanate component (a) with a polyol mixture (b) between medium pipe and casing, wherein the polyol mixture (b) comprises no polyester alcohols and has a viscosity of less than 1300 mPas, measured according to DIN 53019 at 20 DEG C.

The utility model RU 95 061 U1 discloses an end plug for thermally insulated products for pipelines. The end plug is a cylindrical body comprising a bottom with an axial opening for a medium pipe. The end plug is non-detachably attached to a casing.

The prior art most pertinent to the one according to the invention is a heat and water insulation method for a pipe (RF Patent RU 2249756, 2005), including a preliminary arrangement of centering supports of polyethylene on the working pipe while simultaneously installing conductor indicators and aligning the axes of the waterproof casing and the pipe, thus obtaining a "pipe-in-pipe" construction, which is heated in an oven for thermostatic control, further it is placed on an inclined table for pouring the polyurethane foam, where the ends of the casing are preliminarily hermetically sealed by arranging plugs with their air apertures up, whereas the polyurethane foam composition is poured into the inter-pipe space through a pouring aperture, which is plugged after the pouring is completed. During the foaming process of the polyurethane foam composition the inter-pipe space is filled in a bottom-up direction while simultaneously the air is extracted from it through the air apertures in the upper plug, after foaming the polyurethane foam composition is hardened, the plugs are removed, and the ends are covered with waterproofing material.

The method according to RU 2249756 constituting the most pertinent prior art has a low technical efficiency and requires a large volume of material. Since the working pipe and the casing pipe have deviations in their geometrical dimensions by way of technical tolerances, for instance in diameter, wall thickness, oval shape etc., these particularities in combination with the pouring of the thermal insulation material have the consequence that at the stage of formation of the thermal insulation and polymerisation part of the foaming components forming the insulation exits the inter-pipe space, which results in an excess use of basic raw material and leads to an increase of production costs and an occurrence of production waste, while the technical process is made more complex due to the technical operations required for dismantling the detachable end plug after the hardening of the thermal insulation layer and for installing clamps. The products obtained by the method of RU 2249756 are faulty in that they have open areas of thermal insulation at the pipe ends, which are additionally re-worked with a waterproofing material, which does not render protection against mechanical damage during storage, transport and assembly, protection against ultraviolet radiation and other adverse effects.

### Disclosure of the invention

The task underlying the invention is the development of a method providing a simplification of the technical process of producing preliminarily insulated pipes and shaped products, reduce production waste, decrease the manufacturing costs of the finished product and extend the useful life of pipeline systems.

Like the most pertinent prior art, the method according to the invention by means of which preliminarily insulated pipes and shaped products are produced encompasses that a working pipe with centering elements and elements for monitoring the condition of the thermal insulation layer arranged thereon is placed inside a waterproofing casing pipe concentrically to it (coaxially), the annular cavity formed between the waterproofing casing pipe and the working pipe is hermetically sealed by means of end plugs arranged at the ends of the "pipe-in-pipe" construction, and the annular cavity is filled with liquid components of a foaming thermal insulation material.

The underlying task, namely the simplification of the technical process of producing preliminarily insulated pipes and shaped products and the reduction of production waste, was solved by utilising the following characterising features.

Before filling the annular cavity with the components forming the foaming thermal insulation material (the thermal insulation), the end plugs are mounted non-detachably (welding, joining with adhesive and the like) with the waterproofing casing pipe or on the working pipe (preferably on the waterproofing casing pipe), whereas the connection with the other pipe construction "pipe-in-pipe", for instance with the working pipe, must also be hermetically sealed but can be either detachable (press fitted) or non-detachable.

When implementing the method according to the invention it is necessary to use end plugs of a certain construction according to which several necessary apertures are provided on the end plug, namely: first, a servicing aperture for the installation of the means for introduction of the foaming thermal insulation material into the annular cavity between the working pipe and the casing pipe, second, in one or both end plugs at least one aperture for guiding out the elements of the system of monitoring the condition of the thermal insulation layer is provided, third, a servicing aperture at the bottom of which there is a perforated area with a diameter of the perforation apertures of 0.1-3.0 mm. All apertures in the end plug, including the perforated area, can be closed with identical threaded stoppers if required. After the end plugs are installed at the two ends of the "pipe-in-pipe" construction and are non-detachably connected to one or both pipes of this construction, the components of the foaming thermal insulation material for forming the thermal insulation are fed through the servicing aperture of one of the plugs. When the feeding of the foaming thermal insulation material is finished, the servicing aperture is closed with a threaded stopper. Excess pressure of gases within the annular cavity built up in the foaming process is released into the atmosphere through the perforated areas of the end plugs. In the process of filling the annular cavity between the casing pipe and the working pipe with the foaming thermal insulation material, the "pipe-in-pipe" construction is arranged either horizontally or at an angle to the horizon.

The servicing aperture in the end plug (all servicing apertures if there are two or more), the aperture(s) for guiding out the elements of the system for monitoring the condition of the thermal insulation layer, and the perforated area are formed in such a way that they can be hermetically sealed with the threaded stoppers. To install the threaded stoppers, all apertures in the end plug including the perforated area are provided with flanges with an inner thread to receive the threaded stopper, whereas it is preferred that the flanges are turned to the inside of the annular cavity. All threaded stoppers are provided with a groove to receive a screwdriver (or an ordinary coin) identical for all apertures and the perforated area. Furthermore for the purpose of unification all apertures in the end plug should have the same diameter, the shape and diameter of the perforated area must correspond to the other apertures of the end plug, then the threaded stoppers will also be the same for all apertures of the end plug and for the perforated area.

Ferrous and non-ferrous metals, for instance steel, polymer materials, for instance polyethylene, as well as other materials that can be re-processed can be used as materials for producing the waterproofing casing pipe and/or the working pipe and/or the plugs and/or the threaded stoppers.

The end plugs can be formed monolithically or composed of several parts. In the second case the parts of the plug must be assembled into an integral construction before installation. The use of compound plugs is most rational when large diameter pipes are produced.

After the exploitation is completed, the end plugs and the threaded stoppers are re-processed.

The elements of the system for monitoring the thermal insulation layer are arranged in the annular cavity between the casing pipe and the working pipe before the annular cavity is filled with the components of the foaming thermal insulation material for forming the thermal insulation, while one or both plugs are formed with apertures for guiding out the cables (conductors, data buses) of said system.

The hermetically sealed connection of the end plugs is carried out by welding, gluing, press fitting or other known methods, which renders it possible to hermetically seal the product not only lengthwise but also at the ends.

The discharge of gases from the annular cavity of the inter-pipe space is rendered possible by the perforated area formed on the surface of at least one of the end plugs, after the discharging of the gases is completed (after the thermal insulation is hardened) the perforated area is closed by the threaded stopper for hermetical sealing.

The servicing aperture of the end plug provided for the feeding of the components of the foaming thermal insulation material can be used in the finished thermally insulated pipe to control the quality of the obtained thermal insulation at any stage: storage, transport, assembly. The aperture(s) for guiding out the elements of the system for monitoring the thermal insulation layer are closed for hermetical sealing by the stoppers after execution of the necessary technical operations. These apertures are formed with flanges in the shape of a sleeve with a small aperture in the bottom for the conductor to run through. In the cavity of the sleeve the conductor of the system for monitoring the thermal insulation layer can be placed and the threaded stopper can be screwed in, thus insulating the conductor from impacts of the environment.

The technical result of the exploitation of the invention lies in the optimisation of the technical process of producing thermally insulated pipes and shaped products due to:
- a simplification of the hermetical sealing of the annular cavity between the casing pipe and the working pipe;
- the elimination of operations concerning the installation of clamps and the removal of the end plugs and clamps;
- the elimination of open areas of thermal insulation on the finished products, which is the prerequisite of a complete protection of the end surfaces from atmospheric and mechanical impacts during storage and transport of the finished products.

The end plug is easy to install and quickly removed if necessary; it guarantees the hermetical sealing closure of the inter-pipe space at the ends of the pipe and prevents an escape of foaming thermal insulation material during the process of its formation as well as the filling of the annular cavity and polymerisation; it provides an unhindered exit of the cables of the remote operating control system (ROCS) or the leak detection system (LDS) from the annular cavity of the inter-pipe space; it provides the feeding of the components of the foaming thermal insulation material for forming the thermal insulation; it provides a release of reaction gases from the interaction of the components of the foaming thermal insulation material; its mass is insignificant; it can be re-processed.

Besides the above-mentioned advantages, the finished products, that is, the pipes and shaped products obtained by the method according to the invention, have new useful features, namely, when they are used they provide an increased general longevity of the pipeline systems due to the following. If an accident in the pipeline system occurs, the thermally insulated pipe or shaped product obtained as a result of this method prevents a spreading of working fluid (the heat carrier for instance) beyond the boundaries of the accident area and prevents a wetting of the thermal insulation in adjacent areas. This thermal insulation construction of the pipe or shaped product essentially simplifies the repair of pipeline systems and reduces the costs of it. Each pipe forms a completely hermetically sealed pipeline section, and working fluid leaking in the event of damage remains within the boundaries of the hermetically sealed area limited by the working pipe, the waterproofing casing pipe and the end plugs sealingly connected to them, the apertures therein being closed by the stoppers.

The use of the above-described construction for the production of thermally insulated pipes with end plugs makes it possible to achieve the following technical effects and features: a reduction of the number of operations of the technical process; a reduction of the amount of technical waste due to an elimination of losses of the liquid reactive polyurethane foam composition from the inter-pipe space through the servicing gaps; decreasing the number of defective finished products by means of creating optimal conditions for forming a thermal insulation layer; providing for a stable quality of the finished products by means of producing thermally insulated pipes having a calculated thermal conductivity coefficient.

Other results include a better outer appearance of the finished products.

### Short description of the drawings

The invention is explained by the drawings, which show:
- Fig. 1:: The thermally insulated pipe with the end plugs, general view.
- Fig. 2:: View C of Fig. 1 with installed plug and threaded stoppers.

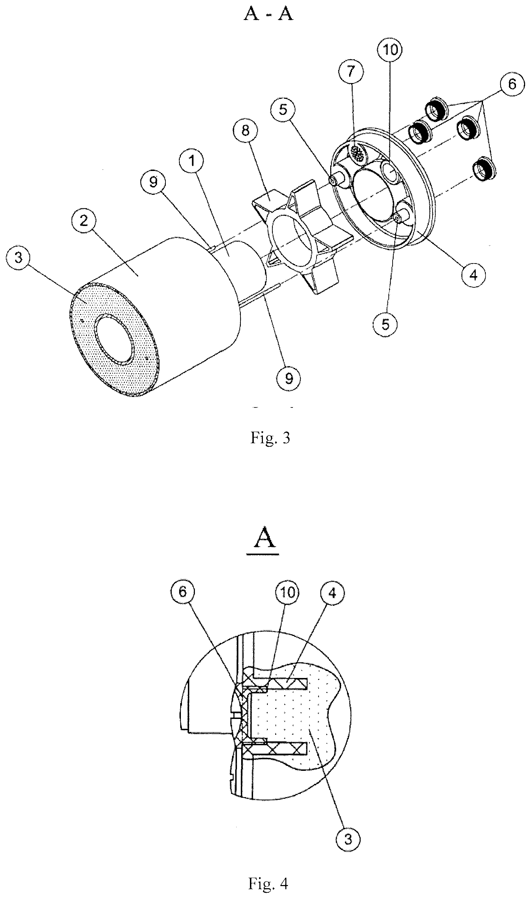

- Fig. 3:: Exploded isometric view, section A-A of Fig. 1.
- Fig. 4:: View A of Fig. 1.

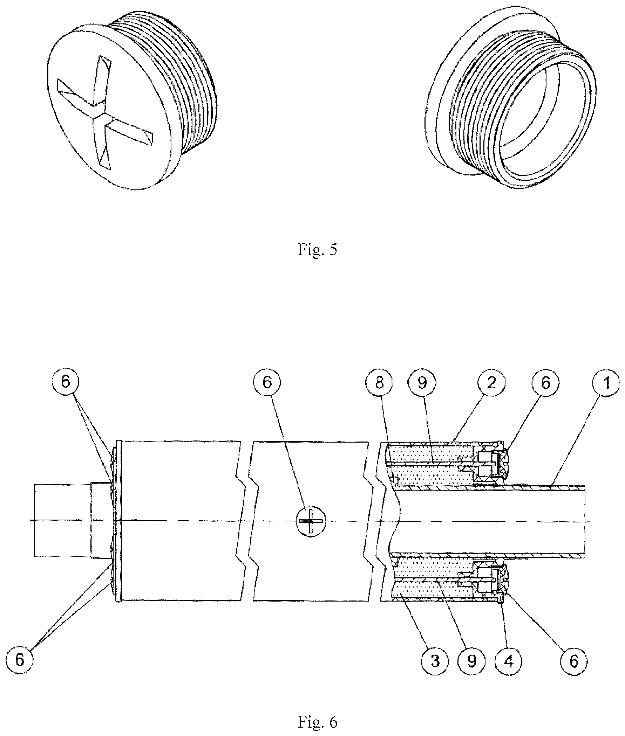

- Fig. 5:: The threaded stopper, two axonometric views (enlarged).
- Fig. 6:: The thermally insulating pipe with the end plugs during horizontal pouring, general view.

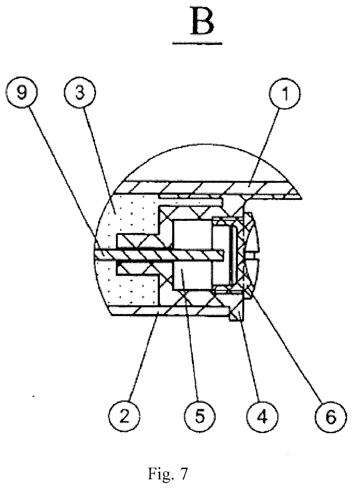

- Fig. 7:: View B of Fig. 1, hermetical sealing of the aperture of the threaded stopper.

In the drawings the reference numbers represent:
- 1:: the working pipe 1;
- 2:: the waterproofing casing pipe;
- 3:: the insulation layer;
- 4:: the end plugs;
- 5:: the apertures in the end plugs for guiding out the elements of the system for monitoring the condition of the thermal insulation layer;
- 6:: the threaded stoppers;
- 7:: the perforated area;
- 8:: the centering supports;
- 9:: the elements of the system for monitoring the condition of the thermal insulation layer;
- 10:: the servicing aperture that makes it possible to introduce the foaming material into the annular inter-pipe space.

### Implementation of the invention

The method for producing pipes and shaped products for pipelines, which facilitates their heat and water insulation, is carried out as follows.

The thermally insulated pipe consists of a working pipe 1, a waterproofing casing pipe 2 and arranged between them an insulating layer 3 of foaming and hardened material, for instance polyurethane (PU) foam. The ends of the thermally insulated pipe are closed by end plugs 4, while the working pipe 1 protrudes beyond the limits of the plugs 4.

The working pipe 1, the waterproofing casing pipe 2 and the end plugs 4 can be made of polymer materials, for instance polyethylene. It is also possible to use other materials or their compounds. For instance, the working pipe 1 can be metallic while the casing pipe, the end plugs and the stoppers are made of polymer materials, for instance of polyethylene.

The end plugs 4, which are positioned concentrically to the working pipe 1 at the ends of the waterproofing casing pipe 2 are identically constructed. The end plugs can be made monolithically or as a composition (combination), made up of two or more parts.

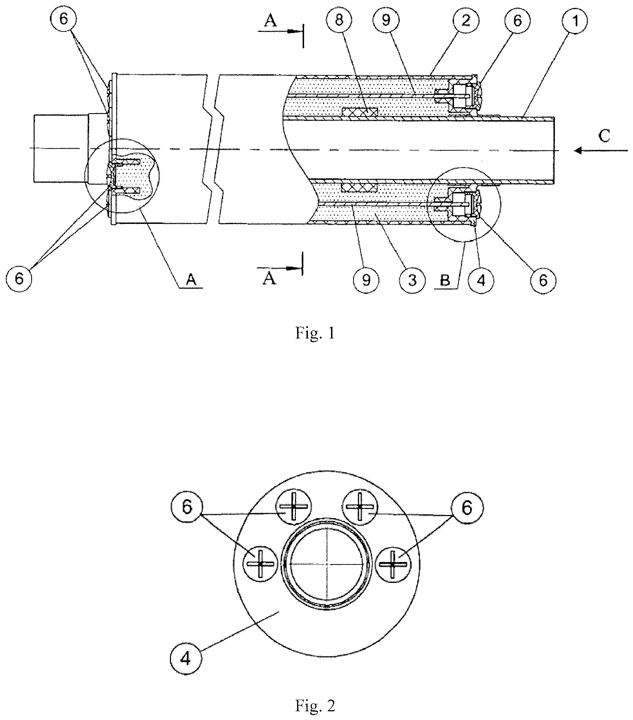

In a preferred embodiment the end plugs 4 can have the form of a conical bushing (see Fig. 1), wherein the outer conical part of the inner wall of the plug fits into the inner surface of the casing pipe 2, while an axial aperture with a neck is formed in the bottom to let the outer surface of the working pipe 1 pass through and hold it.

The end plugs 4 are formed with apertures 5 with identical diameter, fulfilling different functions. All apertures 5 are closed by the threaded stoppers 6. Furthermore on each end plug there is a perforated area 7.

All threaded stoppers 6 are provided with a groove to receive a screwdriver (or coin) and are identical for all end plug apertures.

As a rule at least two apertures 5 in each end plug 4 are provided to guide the elements (cables, data transfer buses etc.) of the system for monitoring the condition of the thermal insulation layer out, for instance, the remote operation control system (ROCS) or the leak detection system (LDS). To increase the rigidity of the plug construction, the apertures 5 can have stiffening ribs or cylindrical flanges oriented to the inside and provided with a thread into which the threaded stoppers 6 are screwed. During storage and transport the elements 9 of the system for monitoring the condition of the thermal insulation layer that are guided out of the annular inter-pipe cavity filled with the thermal insulation layer can be arranged inside the cavity formed by the cylindrical flange and the inner surface of the stopper 6. After the threaded stopper 6 has been screwed in, the elements 9 of the system for monitoring the condition of the thermal insulation layer are insulated from the environment and are thereby kept in their operative condition.

In the annular cavity between the working pipe 1 and the waterproofing casing pipe 2 there is the thermal insulation layer 3 obtained by hardening the foaming material fed into the annular cavity between the waterproofing casing pipe 2 and the working pipe 1. In the production of the thermally insulating pipe a servicing aperture 10 is provided which makes it possible to introduce the foaming material into the annular cavity between the working pipe and the waterproofing casing pipe, which after the introduction of the components of the foaming thermal insulation material is closed by the threaded stopper 6.

When this technical operation is carried out, first the corresponding threaded stopper 6 is screwed out of at least one end plug 4 on the pipe end side, the required amount of liquid components of the foaming material is fed through the aperture 10 into the inner annular cavity formed by the working pipe 1 and the casing pipe 2, and the threaded stopper 6 is screwed down. The end plugs 4 must be sealingly connected to the working pipe 1 and the casing pipe 2 at that moment. The sealing connection of the end plug with the casing pipe 2 and the working pipe 1 can be achieved by any known method: welding, adhesive joining, press fitting etc.

As a result of the interaction between the components of the foaming thermal insulation material a foaming process takes place, forming the thermal insulation layer and polymerising it further until it is completely hardened.

To release the gases that form during foaming and to extract the air displaced by the foaming material, in each end plug 4 a perforated area 7 with perforation apertures having a diameter of essentially 0.1-3.0 mm is provided. The apertures of said diameter render it possible for the gases to exit to the outside freely while the viscous foaming material cannot pass through these apertures, staying inside the annular inter-pipe cavity. Due to this it is possible to eliminate losses of thermal insulation material in the process of producing the thermally insulated pipe. After the foaming material is hardened, the apertures of the perforated area 7 are closed by the threaded stopper 6. The inner annular inter-pipe space is limited because the plugs 4 are arranged at the ends, the perforated areas create the conditions for an annular filling with thermal insulation to the full with a predetermined thermal conductivity coefficient, and due to the above-described plug construction it is hermetically sealed.

The method is carried out as follows.

The working pipe 1, for instance a metal pipe, undergoes a preliminary preparation: rust removal, cleansing, surface degreasing, and is fed into the plant. After the preliminary preparation has been carried out, an anti-corrosive coating can be applied on the outer or the inner surface of the working pipe.

The waterproofing casing pipe 2 is fed into the plant and arranged on an assembly table. If the waterproofing casing pipe 2 is made of polymer material and the surface requires an activation (for instance to increase the adhesion), it is preliminarily processed by known methods, for instance corona discharging, plasma etc.

Centering supports 8 are arranged on the outer surface of the working pipe 1, the cables of the ROCS or LDS systems 9 are mounted. Thereafter the working pipe 1 is fed into the inner cavity of the waterproofing casing pipe 2.

After installation of the working pipe 1 in the inner cavity of the waterproofing casing pipe 2 the end plugs 4 are concentrically positioned at the ends. Subsequently the threaded stoppers 6 on the apertures 5 provided for the ROCS or LDS elements are unscrewed from the plugs 4, and the conductors of the ROCS or LDS system are guided out through the apertures 5 in the end plugs 4 through a corresponding device, and the stopper 6 is screwed down.

The end plugs 4 are sealingly connected to the working pipe 1 and to the waterproofing casing pipe 2 by any known method. One of the connections, preferably with the waterproofing casing pipe 2, is carried out non-detachably (welding, gluing), the other - with the working pipe 1 - by press fitting.

Subsequently the thermal insulation layer 3 is formed. To this end the threaded stopper 6 is unscrewed and taken out of the servicing aperture 10 on one of the plugs 4, and through this servicing aperture the foaming thermal insulation material is fed, that is, the liquid foaming components reactively forming the thermal insulation layer, after which the servicing aperture 10 is closed by the threaded stopper 6. A reaction between the components of the foaming thermal insulation material causes the formation of the thermal insulation layer 3. To release the reaction gases the end plug 4 comprises a servicing device, that is, the perforated area of the aperture 7, which makes a free exit of the gases possible but does not let the viscous composition of the thermal insulation layer pass through. After completion of the polymerisation process the thermal insulation layer is hardened and the aperture 7 is closed by the threaded stopper 6.

Due to the installation of the identical plugs 4 at the ends, which are non-detachably connected to the casing pipe 2, the inner annular cavity between the working pipe 1 and the casing pipe 2 is limited in volume and does not allow the liquid components of the foaming thermal insulation material to leak to the outside, hence the foaming thermal insulation material completely fills the entire annular cavity of the inter-pipe space in the reaction process.

The production of shaped products is carried out in a corresponding manner, i.e. first the semi-finished product is assembled as a "pipe-in-pipe" construction. The end plugs 4 are arranged and non-detachably fastened at the end sides concentrically to the working pipe 1 and the waterproofing casing pipe 2, the ROCS or LDS conductors 9 are guided out, and afterwards the components of the foaming thermal insulation material are fed through the servicing aperture 10 in the end plug 4 to form the insulation, and all servicing apertures are closed by the stoppers 6.

The finished product in the form of a thermally insulated pipe or shaped product is a separate waterproof product, and when installed in a pipeline system it is a separate waterproof section closed on all sides.

## Claims

1. Method for producing insulated pipes or shaped products for pipelines, comprising concentric positioning of a working pipe (1) with centering elements (8) inside a waterproofing casing pipe (2) forming a "pipe-in-pipe" construction, hermetical sealing of the obtained annular cavity of the "pipe-in-pipe" construction by end plugs (4) and filling the annular cavity with foaming thermal insulation material (3),
***characterised in that***
the end plugs (4) are provided with a servicing aperture (10) for the installation of the means for introduction of the foaming thermal insulation material (3), and
wherein before the filling of the annular cavity with the foaming thermal insulation material (3), the end plugs (4) are non-detachably connected to at least one of the pipes (1, 2) of the "pipe-in-pipe" construction, the feeding of the foaming thermal insulation material (3) is carried out through the servicing aperture or apertures (10) in one of the end plugs (4), after completion of the feeding of the foaming thermal insulation material (3) the servicing aperture or apertures (10) in the end plugs (4) are hermetically sealed with a threaded stopper (6), wherein a discharge of the gases creating excess pressure in the annular cavity is carried out through a perforated area (7) on the surface of the end plug (4) wherein the perforated area (7) has perforation apertures with a diameter of 0.1-3.0 mm, wherein after the discharging of the gases is completed the perforated area (7) is closed by the threaded stopper (6) for hermetical sealing.

2. Method according to claim 1, ***characterised in that*** the non-detachable connection of the end plug (4) with the waterproofing casing pipe (2) is carried out by welding or gluing.

3. Method according to claim 1 or 2, ***characterised in that*** the servicing aperture (10) in the end plug (4) is provided with a flange with an inner thread to receive the threaded stopper (6).

4. Method according to claim 3, ***characterised in that*** the waterproofing casing pipe (2), the end plugs (4) and the threaded stoppers (6) are made of polymer materials.

5. Method according to claim 1, ***characterised in that*** before the filling of the annular cavity with the foaming thermal insulation material (3) elements (9) of a system for monitoring the thermal insulation layer are arranged in the annular cavity between the waterproofing casing pipe (2) and the working pipe (1), wherein one or both end plugs (4) are provided with apertures (5) for cables of said system to be guided out.

6. Method according to claim 1 or 3, ***characterised in that*** the end plug (4) is formed monolithically or composed of several assembled parts.

7. Method according to claim 1 or 2, ***characterised in that*** the end plug (4) in the zone of the perforated area (7) is provided with a flange with an inner thread to receive the threaded stopper (6).

8. Method according to claim 3 or 7, ***characterised in that*** the threaded stopper (6) is provided with a groove to receive a screwdriver and is identical for all apertures (5, 10) and the perforated area (7).

9. Method according to claim 1, ***characterised in that*** in the process of filling the annular cavity between the waterproofing casing pipe (2) and the working pipe (1) with foaming thermal insulation material (3) the "pipe-in-pipe" construction is arranged at an angle to the horizon different from 0°.

10. Method according to claim 1, ***characterised in that*** in the process of filling the annular cavity between the waterproofing casing pipe (2) and the working pipe (1) with the foaming thermal insulation material (3) the "pipe-in-pipe" construction is arranged in a horizontal position.

11. Method according to claim 1, ***characterised in that*** the end plugs (4) and the threaded stoppers (6) can be re-processed after the exploitation is finished.

## Patentansprüche

1. Verfahren zur Herstellung isolierter Rohre oder geformter Erzeugnisse für Rohrleitungen, umfassend das konzentrische Positionieren eines Arbeitsrohrs (1) mit Zentrierelementen (8) innerhalb eines abdichtenden Mantelrohres (2) unter Bildung einer "Rohr-in-Rohr"-Konstruktion, das hermetische Abdichten des erhaltenen ringförmigen Hohlraums der "Rohr-in-Rohr"-Konstruktion durch Endstopfen (4) und das Befüllen des ringförmigen Hohlraums mit schäumendem wärmeisolierenden Material (3),
***dadurch gekennzeichnet, dass***
die Endstopfen (4) mit einer Bedienöffnung (10) zum Einrichten von Mitteln zum Einführen des schäumenden wärmeisolierenden Materials (3) versehen sind, und
wobei vor dem Befüllen des ringförmigen Hohlraums mit dem schäumenden wärmeisolierenden Material (3) die Endstopfen (4) nicht lösbar mit wenigstens einem der Rohre (1, 2) der "Rohr-in-Rohr"-Konstruktion verbunden sind, das Zuführen des schäumenden wärmeisolierenden Materials (3) durch die Bedienöffnung oder -öffnungen (10) in einem der Endstopfen (4) erfolgt, nach dem Abschluss des Zuführens des schäumenden wärmeisolierenden Materials (3) die Bedienöffnung oder -öffnungen (10) in den Endstopfen (4) mit einem Gewindeverschluss (6) hermetisch abgedichtet werden, wobei ein Abführen von in dem ringförmigen Hohlraum einen Überdruck erzeugenden Gasen durch einen perforierten Bereich (7) auf der Oberfläche des Endstopfens (4) durchgeführt wird, wobei der perforierte Bereich (7) Perforationsöffnungen mit einem Durchmesser von 0,1-3,0 mm hat, wobei nach dem Abschluss des Abführens der Gase der perforierte Bereich (7) mit dem Gewindeverschluss (6) für das hermetische Abdichten verschlossen wird.

2. Verfahren nach Anspruch 1, ***dadurch gekennzeichnet, dass*** die nicht lösbare Verbindung des Endstopfens (4) mit dem abdichtenden Mantelrohr (2) durch Schweißen oder Kleben hergestellt wird.

3. Verfahren nach Anspruch 1 oder 2, ***dadurch gekennzeichnet, dass*** die Bedienöffnung (10) in dem Endstopfen (4) mit einem Flansch mit einem Innengewinde zur Aufnahme des Gewindeverschlusses (6) versehen ist.

4. Verfahren nach Anspruch 3, ***dadurch gekennzeichnet, dass*** das abdichtende Mantelrohr (2), der Endstopfen (4) und die Gewindeverschlüsse (6) aus Polymermaterialien hergestellt sind.

5. Verfahren nach Anspruch 1, ***dadurch gekennzeichnet, dass*** vor dem Befüllen des ringförmigen Hohlraums mit dem schäumenden wärmeisolierenden Material (3) Elemente (9) eines Systems zur Überwachung der wärmeisolierenden Schicht in dem ringförmigen Hohlraum zwischen dem abdichtenden Mantelrohr (2) und dem Arbeitsrohr (1) angeordnet werden, wobei einer oder beide Endstopfen (4) mit Öffnungen (5) für hinauszuleitende Kabel des Systems versehen sind.

6. Verfahren nach Anspruch 1 oder 3, ***dadurch gekennzeichnet, dass*** der Endstopfen (4) einstückig geformt oder aus mehreren montierten Teilen zusammengesetzt ist.

7. Verfahren nach Anspruch 1 oder 2, ***dadurch gekennzeichnet, dass*** der Endstopfen (4) in der Umgebung des perforierten Bereichs (7) mit einem Flansch mit einem Innengewinde zur Aufnahme des Gewindeverschlusses (6) versehen ist.

8. Verfahren nach Anspruch 3 oder 7, ***dadurch gekennzeichnet, dass*** der Gewindeverschluss (6) mit einer Nut zur Aufnahme eines Schraubendrehers versehen ist und für alle Öffnungen (5, 10) und den perforierten Bereich (7) identisch ist.

9. Verfahren nach Anspruch 1, ***dadurch gekennzeichnet, dass*** im Verlaufe des Befüllens des ringförmigen Hohlraums zwischen dem abdichtenden Mantelrohr (2) und dem Arbeitsrohr (1) mit dem schäumenden wärmeisolierenden Material (3) die "Rohr-in-Rohr"-Konstruktion mit einem von 0° abweichenden Winkel zur Waagerechten angeordnet ist.

10. Verfahren nach Anspruch 1, ***dadurch gekennzeichnet, dass*** im Verlaufe des Befüllens des ringförmigen Hohlraums zwischen dem abdichtenden Mantelrohr (2) und dem Arbeitsrohr (1) mit dem schäumenden wärmeisolierenden Material (3) die "Rohr-in-Rohr"-Konstruktion in waagerechter Position angeordnet ist.

11. Verfahren nach Anspruch 1, ***dadurch gekennzeichnet, dass*** die Endstopfen (4) und die Gewindeverschlüsse (6) nach dem Ende der Betriebszeit wiederverarbeitet werden können.

## Revendications

1. Procédé de production de tubes isolés ou de produits usinés pour pipelines, comprenant le positionnement concentrique d'un tube de travail (1) avec des éléments de centrage (8) à l'intérieur d'un tube de revêtement étanche à l'eau (2) formant une construction "pipe-in-pipe", joignant hermétiquement la cavité annulaire obtenue de la construction "pipe-in-pipe" par des bouchons terminaux (4) et remplissant la cavité annulaire avec une matière d'isolation thermique en mousse (3),
**caractérisé en ce que**
les bouchons terminaux (4) sont munis d'une ouverture de service (10) pour l'installation des moyens d'introduction de la matière d'isolation thermique en mousse (3), et dans lequel avant le remplissage de la cavité annulaire avec la matière d'isolation thermique en mousse (3), les bouchons terminaux (4) sont raccordés de façon non détachable à au moins un des tubes (1, 2) de la construction "pipe-in-pipe", l'amenée de la matière d'isolation thermique en mousse (3) se fait par l'ouverture ou les ouvertures de service (10) dans l'un des bouchons terminaux (4), après achèvement de l'amenée de la matière d'isolation thermique en mousse (3), l'ouverture ou les ouvertures de service (10) dans les bouchons terminaux (4) sont hermétiquement joints avec un stoppeur fileté (6), dans lequel la décharge des gaz créant une pression excessive dans la cavité annulaire s'effectue au travers d'une surface perforée (7) à la surface du bouchon terminal (4) dans laquelle la surface perforée (7) présente des ouvertures perforées d'un diamètre allant de 0,1 à 3,0 mm, dans laquelle après que la décharge des gaz est terminée, la surface perforée (7) est fermée par le stoppeur fileté (6) pour joint hermétique.

2. Procédé selon la revendication 1, **caractérisé en ce que** le raccord non détachable du bouchon terminal (4) avec le tube de revêtement étanche à l'eau (2) s'effectue par soudage ou collage.

3. Procédé selon la revendication 1 ou 2, **caractérisé en ce que** l'ouverture de service (10) dans le bouchon terminal (4) est muni d'une bride taraudée pour recevoir le stoppeur fileté (6).

4. Procédé selon la revendication 3, **caractérisé en ce que** le tube de revêtement étanche à l'eau (2), les bouchons terminaux (4) et les stoppeurs filetés (6) sont fabriqués en matières polymères.

5. Procédé selon la revendication 1, **caractérisé en ce qu'**avant le remplissage de la cavité annulaire avec la matière d'isolation thermique en mousse (3), des éléments (9) d'un système de surveillance de la couche d'isolation thermique sont disposés dans la cavité annulaire entre le tube de revêtement étanche à l'eau (2) et le tube de travail (1), dans lequel l'un ou les deux bouchons terminaux (4) sont munis d'ouvertures (5) pour les câbles dudit système à guider vers l'extérieur.

6. Procédé selon la revendication 1 ou 3, **caractérisé en ce que** le bouchon terminal (4) est formé monolithiquement ou est composé de plusieurs pièces assemblées.

7. Procédé selon la revendication 1 ou 2, **caractérisé en ce que** le bouchon terminal (4) dans la zone de la surface perforée (7) est munie d'une bride taraudée pour recevoir le stoppeur fileté (6).

8. Procédé selon la revendication 3 ou 7, **caractérisé en ce que** le stoppeur fileté (6) présente un sillon pour recevoir un tournevis et est identique pour toutes les ouvertures (5, 10) et la surface perforée (7).

9. Procédé selon la revendication 1, **caractérisé en ce que** lors du processus de remplissage de la cavité annulaire entre le tube de revêtement étanche à l'eau (2) et le tube de travail (1) avec la matière d'isolation thermique en mousse (3), la construction "pipe-in-pipe" est disposée à un angle par rapport à l'horizon différent de 0°.

10. Procédé selon la revendication 1, **caractérisé en ce que** lors du processus de remplissage de la cavité annulaire entre le tube de revêtement étanche à l'eau (2) et le tube de travail (1) avec la matière d'isolation thermique en mousse (3), la construction "pipe-in-pipe" est disposée dans une position horizontale.

11. Procédé selon la revendication 1, **caractérisé en ce que** les bouchons terminaux (4) et les stoppeurs filetés (6) peuvent être retraités à la fin de l'exploitation.
